# EUROPÄISCHE PATENTSCHRIFT

(11) **EP 2 029 327 B1**
(45) Veröffentlichungstag und Bekanntmachung des Hinweises auf die Patenterteilung: **16.06.2010**
(21) Anmeldenummer: 07728285.3
(22) Anmeldetag: 19.04.2007
(51) Int. Cl.: B25F 5/00

(54) **HANDWERKZEUGMASCHINE MIT MITTELN ZUM LOTRECHTEN AUSRICHTEN**
HAND-HELD MACHINE TOOL WITH MEANS FOR PERPENDICULAR ALIGNMENT
MACHINE-OUTIL MANUELLE AVEC DES MOYENS POUR L'ALIGNEMENT VERTICAL

(30) Priorität: 06.06.2006 DE 102006026156
(43) Veröffentlichungstag der Anmeldung: 04.03.2009
(73) Patentinhaber: Robert Bosch GmbH, 70442 Stuttgart (DE)
(72) Erfinder: HOFFMANN, Ulli, 75223 Niefern-Oeschelbronn (DE); WIELAND, Christoph, 71083 Herrenberg-Kuppingen (DE)
(86) Internationale Anmeldenummer: PCT/EP2007/053825
(87) Internationale Veröffentlichungsnummer: WO 2007/141081

(56) Entgegenhaltungen:
- DE-A1- 4 336 730
- US-A- 2 855 679
- US-A- 4 078 869
- US-B1- 6 328 505
- US-B1- 6 565 227
- US-B1- 7 200 516

## Beschreibung

### Stand der Technik

Die Erfindung geht aus von einer Handwerkzeugmaschine nach dem Oberbegriff des Anspruchs 1.

Handwerkzeugmaschinen, wie Bohrmaschinen, Schlagbohrmaschinen oder Bohrhämmer, werden insbesondere im Heimwerkerbereich beim Bohren von Löchern, z.B. in Wände, frei mit den Händen gehalten. Beim Aufsetzen der Handwerkzeugmaschine mit dem in das Spannfutter eingespannten Werkzeug auf die Wand sorgt ein mehr oder weniger gutes Augenmaß des Bedieners dafür, dass die Handwerkzeugmaschine einigermaßen lotrecht ausgerichtet ist, damit ein zur Wandoberfläche rechtwinklig verlaufendes Bohrloch erzielt werden kann.

Bei professionellen Handbohrmaschinen ist es bekannt, die Bohrmaschine mit einer Richthilfe zu versehen, die mit dem Ansetzen des Bohrers sich auf die Wandoberfläche aufsetzt und dadurch der Bohrmaschine eine Stellung vorgibt, in welcher der Bohrer rechtwinklig zur Wandoberfläche ausgerichtet ist. Diese bekannte Richthilfe weist eine großflächige Stirnplatte zur Auflage auf der Wandoberfläche auf. Die Stirnplatte besitzt eine zentrale Öffnung zum Durchtritt des Bohrers und ist am Stirnende von zwei im Parallelabstand zueinander verlaufenden Stangen befestigt. Die Stangen sind in je einem am Maschinengehäuse befestigten Rohr axial gegen die Kraft einer im Rohr einliegenden Druckfeder verschiebbar geführt. Ein Anschlag begrenzt den Verschiebeweg der Stangen bei sich entspannenden Druckfedern. Der Anschlag ist so festgelegt, dass bei von der Wand abgehobener Bohrmaschine die Stirnplatte in Bohrrichtung gesehen vor der Bohrerspitze liegt. Zum Bohren eines auf der Wand markierten Bohrlochs wird die Bohrmaschine mit der Stirnplatte der Richthilfe auf die Wand so aufgesetzt, dass die Bohrerspitze mit der Lochmarkierung fluchtet. Dann wird die Bohrmaschine gegen die Wand geschoben, wodurch die Stangen in die Führungsrohre weiter eintauchen und der Bohrer durch die zentrale Öffnung in der Stirnplatte hindurch in die Wand rechtwinklig zur Wandoberfläche eindringt.

Aus US 2,855,679 ist ein Aufsatz als Richthilfe für eine Handbohrmaschine bekannt, wobei der Aufsatz ein ringförmiges Leuchtmittel und konzentrisch um das Einsatzwerkzeug angeordnete Löcher aufweist, durch die das Licht des Leuchtmittels austritt. Mit Hilfe des Aufsatzes wird auf dem zu bearbeitenden Werkstück ein relativ zu dem Einsatzwerkzeug konzentrischer Ring aus Lichtpunkten gebildet.

Des Weiteren ist aus US 4,078,869 ebenfalls eine Handbohrmaschine mit Richthilfe bekannt. Der als Richthilfe dienende Aufsatz umfasst einen Fokussierring, mit dem der Einstrahlwinkel der Lichtstrahlen relativ zur Werkstückoberfläche einstellbar ist.

### Offenbarung der Erfindung

Die erfindungsgemäße Richthilfe zum Ausrichten einer Handwerkzeugmaschine, insbesondere einer Bohrmaschine, einer Schlagbohrmaschine, eines Bohrhammers oder eines Schraubbohrers, mit den Merkmalen des Anspruchs 1 hat den Vorteil, dass sie bauklein und leichtgewichtig ist und die gute Handhabbarkeit der Werkzeugmaschine sowie den Arbeitsvorgang nicht beeinträchtigt, also weder behindernd noch störend wirkt. In der einfachen Version der Richthilfe hat der Bediener nur darauf zu achten, dass nach dem Aufsetzen der Werkzeugspitze auf die Werkstückoberfläche, z.B. auf eine Wand, die auf die Werkstückoberfläche projizierten Lichtflecke in etwa gleich groß sind. Ist dies der Fall, so kann er die Werkzeugmaschine zur Durchführung des Arbeitsvorgangs einschalten. In einer anspruchsvolleren Version der Richthilfe erfolgt der Größenvergleich der Lichtflecke ohne Zutun des Bedieners. Dem Bediener wird separat die Übereinstimmung und Nichtübereinstimmung der Größe der Lichtflecke angezeigt, so dass er durch Neigen oder Kippen der Handwerkzeugmaschine in die eine oder andere Richtung die Anzeige "Übereinstimmung" herbeiführen kann.

Durch die in den weiteren Ansprüchen aufgeführten Maßnahmen sind vorteilhafte Weiterbildungen und Verbesserungen der im Anspruch 1 angegebenen Richthilfe möglich.

### Kurze Beschreibung der Zeichnung

Die Erfindung ist anhand eines in der Zeichnung dargestellten Ausführungsbeispiels in der nachfolgenden Beschreibung näher erläutert. Es zeigen in schematischer Skizzierung:
- Fig. 1: eine perspektivische Seitenansicht einer mit einer Richthilfe versehenen Handbohrmaschine,
- Fig. 2: eine vergrößerte Darstellung einer Projektionsvorrichtung in der Richthilfe in Fig. 1.

### Ausführungsform der Erfindung

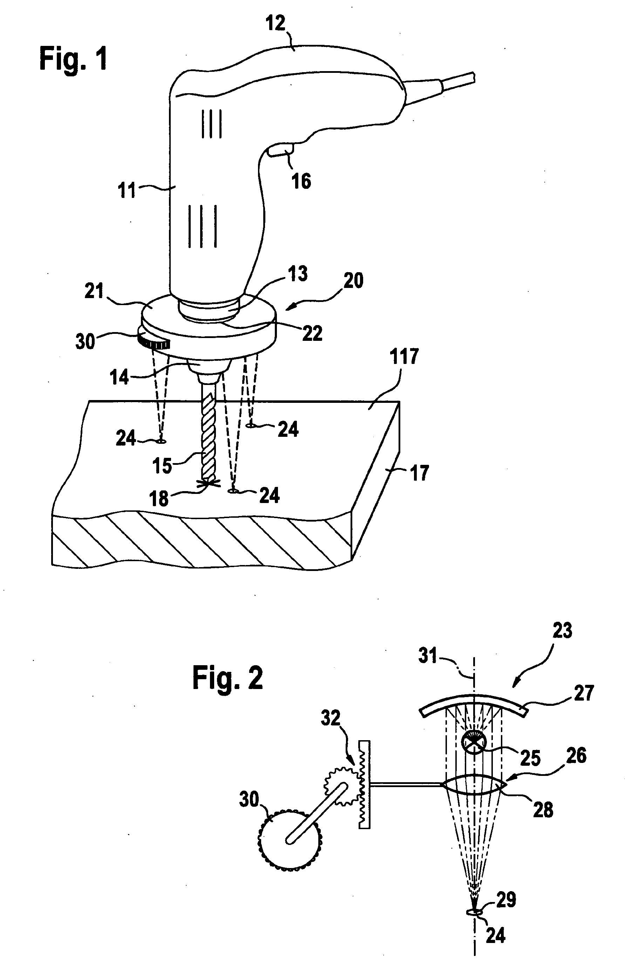

Eine in Fig. 1 perspektivisch dargestellte Handbohrmaschine 10, als Ausführungsbeispiel für eine allgemeine Handwerkzeugmaschine, weist ein Maschinengehäuse 11 mit einem daran angeformten Handgriff 12 und einem an dem vom Handgriff 12 abgekehrten Ende des Maschinengehäuses 11 angeformten Gehäusehals 13 auf. Aus dem Gehäusehals 13 ragt eine hier nicht zu sehende Antriebsspindel heraus, auf der ein Spannfutter 14 zum Einspannen eines Werkzeugs, hier eines Bohrers 15, drehfest sitzt. Die Antriebsspindel mit Spannfutter 14 wird in bekannter Weise von einem im Maschinengehäuse 11 angeordneten Elektromotor über ein Getriebe angetrieben. Der Elektromotor ist mittels eines Handschalters 16, der in den Handgriff 12 integriert ist, ein- und ausschaltbar. Zum Bohren eines Lochs in ein Werkstück 17, das auch eine Wand sein kann, wird die Handbohrmaschine 10 von Hand mit der Bohrerspitze auf eine auf der Werkstückoberfläche 171 markierte Bohrstelle 18 aufgesetzt. Um ein rechtwinklig zur Werkstückoberfläche 171 eindringendes Bohrloch zu erzeugen, muss die Handbohrmaschine 10 so gehalten werden, dass der Bohrer 15 lotrecht zur Werkstückoberfläche 171 ausgerichtet ist. Um dies nicht dem Augenmaß des Bediener zu überlassen, ist die Handbohrmaschine 10 mit einer Richthilfe 20, die ein exaktes lotrechtes Ausrichten des Bohrers 15 ermöglicht, versehen.

Die Richthilfe 20 weist ein Gehäuse 21 auf, das an der Handbohrmaschine 10 koaxial zur Werkzeugachse festlegbar ist. Hierzu umschließt das rotationssymmetrische, ringförmige Gehäuse 21 eine zentrale zur Gehäuseachse koaxiale Gehäuseöffnung 22, deren Innendurchmesser an den Außendurchmesser des Gehäusehalses 13 angepasst ist. Die Richthilfe 20 ist mit ihrem ringförmigen Gehäuse 21 über die zentrale Gehäuseöffnung 22 auf den Gehäusehals 13 der Handbohrmaschine 10 formschlüssig aufschiebbar und in ihrer Aufschiebestellung fixierbar. Da die Achsen von Gehäuse 21 der Richthilfe 20, Bohrer 15, Spannfutter 14, Gehäusehals 13 und Antriebsspindel miteinander fluchten, sitzt das Gehäuse 21 der Richthilfe 20 koaxial zur Achse des im Spannfutter 14 gehaltenen Bohrers 15 auf dem Maschinengehäuse 11. Im Gehäuse 21 sind drei um Umfangswinkel gegeneinander versetzte Projektionsvorrichtungen 23 vorhanden. Die Projcktionsvorrichtungen 23 sind gleich ausgebildet und auf einem zur Gehäuseachse konzentrischen Ortskreis äquidistant angeordnet. Sie sind so ausgerichtet, dass ihre optischen Achsen bzw. Projektionsachsen 31 parallel zur Gehäuseachse verlaufen. Jede Projektionsvorrichtung 23 erzeugt bei mit der Werkzeugspitze auf die Werkstückoberfläche 17 angesetzter Handbohrmaschine einen Lichtfleck 24 auf der die Aufsetzfläche darstellenden Werkstückoberfläche 171.
In Fig. 2 ist schematisiert eine Projektionsvorrichtung 23 dargestellt. Die Projektionsvorrichtung 23 weist eine Projektionslampe 25 und eine Optik 26 auf, die aus einem Reflektor 27 und einer Linse 28 besteht. Reflektor 27 und Linse 28 sind auf voneinander abgekehrten Seiten der Projektionslampe 25 symmetrisch zur optischen Achse der Projektionsvorrichtung 23 angeordnet. Parallel zur optischen Achse bzw. Projektionsachse 31 durch die Linse 28 hindurchtretende Lichtstrahlen werden in bekannter Weise in der Linse 28 so gebeugt, dass sie sich im Brennpunkt 29 der Linse 28 schneiden. Der Abstand des Fokus oder des Brennpunkts 29 von der Linse 28 definiert in bekannter Weise die Brennweite der Optik 26. Die Optiken 26 der drei im Gehäuse 21 angeordneten Projektionsvorrichtungen 23 sind so ausgebildet, dass alle drei Brennpunkte 24 um 120° Umfangswinkel gegeneinander versetzt auf einer zur Gehäuseachse des Gehäuses 21 rechtwinklig ausgerichteten Bezugebene liegen. Im Fokus oder Brennpunkt 29 weisen die von den Projektionsvorrichtungen 23 erzeugten Lichtflecke 24 jeweils eine minimale Größe auf. Vor und hinter dem Brennpunkt 29 werden die von den Projektionsvorrichtungen 23 projizierten Lichtflecke 24 in ihrer Ausdehnung größer.

Zur Berücksichtigung unterschiedlicher Bohrerlängen ist in jeder Projektionsvorrichtung 23 die Linse 28 längs der optischen Achse bzw. Projektionsachse 31 verschiebbar ausgebildet. Die Verschiebung der Linse 28 erfolgt manuell mittels eines am Gehäuse 21 vorstehenden Fokus-Einstellrads 30. Dabei ist das Fokus-Einstellrad 30 mit den Linsen 28 aller drei Projektionsvorrichtungen 23 z.B. über ein geeignetes Getriebe 32 so gekoppelt, dass bei Betätigen des Fokus-Einstellrads 30 eine Verschiebung der Linsen 28 immer gemeinsam und um den gleichen Betrag erfolgt.

### Die an der Handbohrmaschine 10 befestigte Richthilfe 20 wirkt wie folgt:

Die mit der Richthilfe 20 ausgerüstete Handbohrmaschine 10 wird an das Werkstück 17 so angesetzt, dass die Bohrerspitze des Bohrers 15 die markierte Bohrstelle 18 berührt. Bei etwa lotrechtem Halten der Handbohrmaschine nach Augenmaß wird das Fokus-Einstellrad 30 solange in die eine oder andere Richtung verdreht, bis mindestens einer der von den Projektionsvorrichtungen 23 auf der Werkstückoberfläche 171 abgebildeten Lichtflecke 24 eine minimale Größe aufweist. Dann wird die Handbohrmaschine 10 in die eine oder andere Richtung geneigt, bis alle drei projizierten Lichtflecke 24 die gleiche Größe haben. Ist dies der Fall, ist die Handbohrmaschine 10 korrekt zur Werkstückoberfläche 171 ausgerichtet, und der Bohrer 15 nimmt eine lotrechte Stellung zur Werkstückoberfläche 171 ein. Der Bohrvorgang kann nunmehr durchgeführt werden.

Wie hier nicht weiter dargestellt ist, ist es auch möglich; den visuellen Vergleich der Größen der Lichtflecke 24 durch den Bediener zu vermeiden und den Größenvergleich automatisch mittels einer geeigneten Elektronik durchzuführen. Für diesen Fall ist am Gehäuse 21 eine Anzeige vorgesehen, die dem Bediener eine Übereinstimmung und eine Nichtübereinstimmung der Lichtfleckgrößen anzeigt. Der Bediener muss dann die Handbohrmaschine 10 in die eine oder andere Richtung neigen, bis die Anzeige "Übereinstimmung" erscheint.

Die Anwendung der Richthilfe ist nicht auf die beschriebene elektrische Handbohrmaschine beschränkt. Mit gleichem Vorteil kann die Richthilfe auch in Verbindung mit anderen Handwerkzeugmaschinen, z. B. Schlagbohrmaschinen, Bohrhämmern od. dgl., eingesetzt werden. Ebenfalls ist ihre Anwendung bei einem Schraubbohrer nützlich, wenn Schrauben ohne Vorbohren eingezogen werden sollen.

## Patentansprüche

1. Richthilfe zum lotrechten Ausrichten einer Handwerkzeugmaschine mit einem Werkzeug mit einem an der Handwerkzeugmaschine (10) koaxial zu deren Werkzeugachse festlegbarem Gehäuse (21) und mindestens drei im Gehäuse (21) um Umfangswinkel gegeneinander versetzt angeordneten optischen Projektionsvorrichtungen (23), die auf eine beabstandete Werkzeugaufsetzfläche jeweils einen Lichtfleck (24) projizieren, wobei jede Projektionsvorrichtung (23) eine Projektionslampe (25) und eine Optik (26) mit Brennpunkt (29) aufweist, und dass die Optiken (26) so ausgebildet sind, dass die Brennpunkte (29) aller Optiken (26) auf einer zur Gehäuseachse rechtwinklig ausgerichteten Bezugsebene liegen, **dadurch gekennzeichnet, dass** zur Veränderung der Brennweiten ein am Gehäuse (21) zur manuellen Bedienung zugängliches Fokus-Einstellrad (30) derart vorgesehen ist, dass die durch den Abstand des Brennpunkts (29) von der Optik (26) definierten Brennweiten der Optiken (26) aller Projektionsvorrichtungen (23) nur gemeinsam und um den gleichen Betrag veränderbar sind.

2. Richthilfe nach Anspruch 1, **dadurch gekennzeichnet, dass** die Projektionsvorrichtungen (23) auf einem zur Gehäuseachse konzentrischen Ortskreis äquidistant angeordnet und so ausgerichtet sind, dass ihre Projektionsachsen (31) parallel zur Gehäuseachse verlaufen.

3. Richthilfe nach einem der Ansprüche 1 oder 2, **dadurch gekennzeichnet, dass** die Optik (26) einer jeden Projektionsvorrichtung (23) eine Linse (28) und einen Reflektor (27) aufweist, die auf voneinander abgekehrten Seiten der Projektionslampe (25) angeordnet sind, und dass die Linse (28) längs der Projektionsachse (31) axial verschiebbar ausgebildet ist.

4. Richthilfe nach Anspruch 3, **dadurch gekennzeichnet, dass** die Linsen (28) aller Projektionsvorrichtungen (23) in einer gleiche Axialverschiebungen bewirkenden Weise mit dem Fokus-Einstellrad (30) gekoppelt sind.

5. Richthilfe nach einem der Ansprüche 1 bis 4, **dadurch gekennzeichnet, dass** das Gehäuse (21) auf einen an der Handwerkzeugmaschine (10) angeformten, zur Werkzeugachse koaxialen Hals (13) aufschiebbar und festsetzbar ist.

6. Richthilfe nach einem der Ansprüche 1 bis 5, **dadurch gekennzeichnet, dass** zum lotrechten Ausrichten der Handwerkzeugmaschine (10) ein Vergleich der Größe der auf die Werkzeugaufsetzfläche projizierten Lichtflecke (24) dient und die lotrechte Ausrichtung der Handbohrmaschine (10) bei gleicher Größe aller Lichtflecke (24) gegeben ist.

7. Richthilfe nach Anspruch 6, **dadurch gekennzeichnet, dass** die Größengleichheit der Lichtflecke (24) visuell durch den Bediener oder automatisch mit Ungleichheits- und Gleichheitsanzeige feststellbar ist.

8. Handwerkzeugmaschine umfassend eine Richthilfe nach einem der Ansprüche 1 bis 7.

## Claims

1. Alignment aid for the perpendicular alignment of a portable power tool having a tool, comprising a housing (21) which can be fixed to the portable power tool (10) coaxially to the tool axis thereof and comprising three optical projection devices (23) which are arranged in the housing (21) offset from one another by a circumferential angle and which each project a light spot (24) onto a tool placement surface at a distance therefrom, wherein each projection device (23) has a projection lamp (25) and an optical system (26) with focal point (29), and wherein the optical systems (26) are designed in such a way that the focal points (29) of all the optical systems (26) lie on a reference plane oriented at right angles to the housing axis, **characterized in that,** to vary the focal lengths, a focus setting wheel (30) accessible on the housing (21) for manual operation is provided in such a way that the focal lengths of the optical systems (26) of all the projection devices (23), said focal lengths being defined by the distance of the focal spot (29) from the optical system (26), can only be jointly varied and by the same amount.

2. Alignment aid according to Claim 1, **characterized in that** the projection devices (23) are arranged equidistantly on a location circle concentric to the housing axis and are oriented in such a way that their projection axes (31) run parallel to the housing axis.

3. Alignment aid according to either of Claims 1 and 2, **characterized in that** the optical system (26) of each projection device (23) has a lens (28) and a reflector (27) which are arranged on sides of the projection lamp (25) that face away from one another, and **in that** the lens (28) is designed to be axially displaceable along the projection axis (31).

4. Alignment aid according to Claim 3, **characterized in that** the lenses (28) of all the projection devices (23) are coupled to the focus setting wheel (30) in a manner that produces identical axial displacements.

5. Alignment aid according to one of Claims 1 to 4, **characterized in that** the housing (21) can be slipped onto and secured on a neck (13) integrally formed on the portable power tool (10) and coaxial to the tool axis.

6. Alignment aid according to one of Claims 1 to 5, **characterized in that** a comparison of the sizes of the light spots (24) projected onto the tool placement surface serves for the perpendicular alignment of the portable power tool (10), and the portable power drill (10) is perpendicularly aligned when all the light spots (24) have the same size.

7. Alignment aid according to Claim 6, **characterized in that** the size equality of the light spots (24) can be determined visually by the user or automatically by inequality and equality display.

8. Portable power tool comprising an alignment aid according to one of Claims 1 to 7.

## Revendications

1. Aide à l'alignement pour l'alignement vertical d'une machine-outil manuelle comprenant un outil avec un boîtier (21) pouvant être fixé sur la machine-outil manuelle (10) coaxialement à son axe d'outil et au moins trois dispositifs de projection optiques (23) disposés de manière décalée les uns par rapport aux autres dans le boîtier (21) suivant un angle périphérique, qui projettent sur une surface d'application d'outil espacée à chaque fois un point lumineux (24), chaque dispositif de projection (23) présentant une lampe de projection (25) et une optique (26) avec un foyer (29), et les optiques (26) étant réalisées de telle sorte que les foyers (29) de toutes les optiques (26) se situent sur un plan de référence orienté à angle droit par rapport à l'axe du boîtier, **caractérisée en ce que** pour faire varier les longueurs focales, on prévoit une roue d'ajustement de focalisation (30) accessible sur le boîtier (21) pour la commande manuelle, de telle sorte que les longueurs focales des optiques (26) définies par la distance du foyer (29) à l'optique (26) pour tous les dispositifs de projection ne puissent être modifiées qu'en commun et de la même valeur.

2. Aide à l'alignement selon la revendication 1, **caractérisée en ce que** les dispositifs de projection (23) sont disposés de manière équidistante sur un cercle concentrique à l'axe du boîtier et sont orientés de telle sorte que leurs axes de projection (31) s'étendent parallèlement à l'axe du boîtier.

3. Aide à l'alignement selon l'une quelconque des revendications 1 ou 2, **caractérisée en ce que** l'optique (26) de chacun des dispositifs de projection (23) présente une lentille (28) et un réflecteur (27), qui sont disposés sur des côtés opposés de la lampe de projection (25), et **en ce que** la lentille (28) est réalisée de manière déplaçable axialement le long de l'axe de projection (31).

4. Aide à l'alignement selon la revendication 3,
**caractérisée en ce que** les lentilles (28) de tous les dispositifs de projection (23) sont accouplées d'une même manière à la roue d'ajustement de focalisation (30) pour produire des déplacements axiaux identiques.

5. Aide à l'alignement selon l'une quelconque des revendications 1 à 4, **caractérisée en ce que** le boîtier (21) peut être poussé et fixé sur un col (13) coaxial à l'axe d'outil, façonné sur la machine-outil manuelle (10).

6. Aide à l'alignement selon l'une quelconque des revendications 1 à 5, **caractérisée en ce que** pour l'alignement vertical de la machine-outil manuelle (10), on utilise une comparaison de la taille du point lumineux (24) projeté sur la surface d'application d'outil, et l'alignement vertical de la perceuse manuelle (10) est obtenu quand tous les points lumineux (24) ont la même taille.

7. Aide à l'alignement selon la revendication 6, **caractérisée en ce que** l'égalité de taille des points lumineux (24) peut être constatée visuellement par l'opérateur ou automatiquement par des indications d'inégalité et d'égalité.

8. Machine-outil manuelle comprenant une aide à l'alignement selon l'une quelconque des revendications 1 à 7.
